# FASCICULE DE BREVET EUROPEEN

(11) **EP 1 497 736 B1**
(45) Date de publication et mention de la délivrance du brevet: **25.06.2008**
(21) Numéro de dépôt: 03727597.1
(22) Date de dépôt: 19.03.2003
(51) Int. Cl.: G06F 15/02

(54) **DISPOSITIF PORTABLE ET LEGER PERMETTANT DE RECEVOIR A HEURES PROGRAMMEES DES MESSAGES PREALABLEMENT ENREGISTRES**
LEICHTE,TRAGBARE VORRICHTUNG ZUR ABGABE VON PROGRAMMIERTEN ZEITEN VORHER AUFGEZEICHNETER NACHRICHTEN
PORTABLE, LIGHTWEIGHT DEVICE FOR RECEIVING PRE-RECORDED MESSAGES AT PROGRAMMED TIMES

(30) Priorité: 20.03.2002 FR 0203857
(43) Date de publication de la demande: 19.01.2005
(73) Titulaire: Peze, William, F-92700 Colombes (FR)
(72) Inventeur: Peze, William, F-92700 Colombes (FR)
(74) Mandataire: Desrois, Julie
(86) Numéro de dépôt international: PCT/FR2003/000873
(87) Numéro de publication internationale: WO 2003/079208

(56) Documents cités:
- EP-A- 0 519 838
- WO-A-01/16816
- DE-A- 19 913 887
- US-A- 4 302 752
- US-A- 5 334 974
- US-A- 5 696 496

## Description

La présente invention concerne un dispositif portable et léger permettant de recevoir à heures programmées des messages préalablement enregistrés.
1) dans sa version simple il s'agit d'un « agenda qui parle » : il s'agit d'un boîtier de la taille d'un petit téléphone portable présentant deux faces :
   - Sur la face A un simple bouton-pressoir (1) et un haut-parleur (2). Quand ce dernier émet une sonnerie, la personne n'a qu'à appuyer sur le bouton pour s'entendre dire ce qu'elle doit alors faire (par ex : « vous avez rendez-vous dans une demi-heure avec le chef du personnel », ou « n'oublie pas l'anniversaire de ta fille. Son numéro est 01 23 45 67 89 ».) La personne peut ré-appuyer sur ce bouton afin de s'entendre répéter le message, si elle ne l'a pas très bien compris. Chaque message entendu efface le précédent.
      Cette face présente en outre une trappe d'accès aux piles (ou à la batterie dans une option différente) (11).

   La face B n'est accessible qu'en ouvrant le volet (10) qui la cache. Elle comprend un microphone (14), un écran (3) indiquant la date et l'heure, programmables au moyen de touches de déplacement (4) et d'informations chiffrées (7). Par exemple 12.03.02 pour la date (12 mars 2002) et 11.15 pour l'heure (11 heures et quart). La correction est possible, soit pour un item en appuyant brièvement sur la touche Efface (6), soit pour toute la ligne (date ou heure) en appuyant plus longuement.
   La date et l'heure étant fixées, il ne reste qu'à enregistrer le message en appuyant sur la touche 5, avec possibilité de l'effacer pour le corriger avec la touche 6.
   L'horloge interne de l'appareil permettra alors de déclencher à l'heure voulue la sonnerie qui permettra l'audition du message. La mise ou remise à la date et à l'heure s'effectue en appuyant sur la touche « time » (13).
   Une molette latérale (8) permet de régler le volume sonore. Cette face B est programmable par son propriétaire ou par un tiers (une secrétaire, un membre de la famille...)
2) dans sa version complète l'appareil comprend en plus un récepteur téléphonique permettant de le programmer à distance. Il est par exemple indiqué pour les personnes à mémoire déficiente pour leur rappeler, en temps et en heure voulue, ce qu'ils doivent alors faire. Par exemple « madame, il est temps de prendre votre comprimé bleu » ou « Mamie prépare toi, je passe te prendre dans une demie heure ».

Une touche particulière (9) est ici destinée à donner, en cas de problème, des indications de secours à un tiers. (« Je m'appelle Madame X..., j'habite à Y..., en cas de problème prévenir mon fils joignable au Z... etc...)

Cette face B de programmation peut être remplie par toute personne s'occupant du propriétaire à mémoire déficiente : sa famille, ses soignants, etc... Mais elle peut être aussi remplie par la personne elle-même qui peut s'avérer capable de faire son propre programme si elle sait qu'elle risque d'oublier. (Par exemple, un rendez vous qu'elle vient de prendre par téléphone chez son coiffeur). On peut aussi prévoir une programmation directe plus simple, vocale.

Cet appareil doit pouvoir être programmé à distance par voie téléphonique au moyen d'un code d'accès afin de déterminer, par convention familiale par exemple, les seules personnes pouvant enregistrer les messages.

Dans le cas où on choisit l'option « batterie » plutôt que « pile », l'appareil est rechargeable sur socle branché sur secteur. (12 :plots de recharges).

Selon l'invention, un appareil enregistreur portable comporte des moyens permettant d'être prévenu à jours et heures programmés de la réception de messages préalablement enregistrés. Il comporte un enregistreur et une horloge interne déclenchant la délivrance des messages à dates et heures voulues.

Un tel appareil est principalement reconnaissable en ce qu'il comporte aussi un bouton pressoir sur sa face A pour déclencher l'écoute de l'enregistrement par le haut-parleur. L'appareil présente sur sa face B un microphone et un battant à charnière d'accès, notamment à un écran de dates et d'heures, à des touches de programmation, à une touche d'enregistrement des messages, à une touche d'effacement, à une touche de mise à la date et à l'heure, à la touche SOS éventuelle.

L'appareil comprend de préférence un récepteur téléphonique permettant la programmation à distance au moyen d'un téléphone à accès codé.

L'appareil présente de préférence une touche SOS déclenchant l'écoute des données de base de son propriétaire et les personnes à prévenir en cas d'accident.

L'appareil fonctionne de préférence sur piles ou sur batterie, dont la trappe d'accès est située sur la face A.

L'appareil de préférence présente latéralement une molette de réglage de l'intensité sonore du haut-parleur.

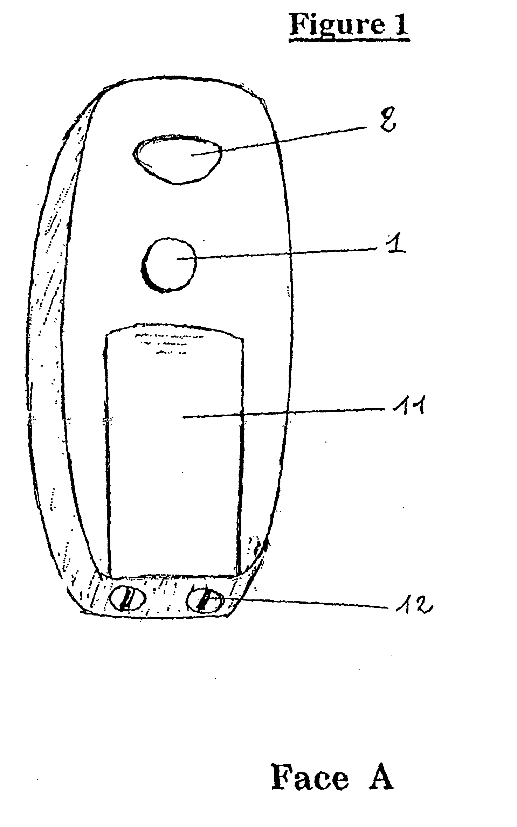

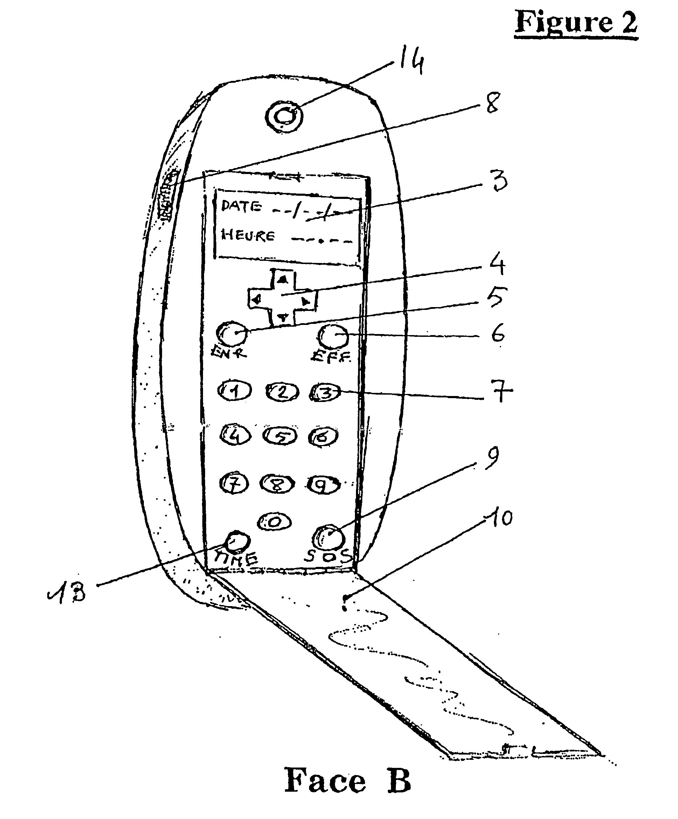

## Revendications

1. Appareil enregistreur portable comportant des moyens permettant d'être prévenu à jours et heures programmés de la réception de messages préalablement enregistrés, cet appareil comportant un enregistreur et une horloge interne déclenchant la délivrance des messages à dates et heures voulues, **caractérisé en ce qu'**il comporte un boîtier présentant deux faces, dont une face A comportant un bouton pressoir (1) et un haut parleur (2) pour que, quand ce dernier émet une sonnerie, la personne à mémoire déficiente puisse appuyer sur le bouton pressoir (1) pour s'entendre dire ce qu'elle doit alors faire, et une face B qui n'est accessible qu'en ouvrant un volet (10) qui la cache, cette face B comportant un microphone (14), un écran (3) indiquant la date et l'heure, programmables au moyen de touches de déplacement (4) et d'informations chiffrées (7) pour, la date et l'heure étant fixées, enregistrer le message en appuyant sur une touche (5), l'horloge interne de l'appareil permettant de déclencher à l'heure voulue la sonnerie qui permettra l'audition du message.

2. Appareil selon la revendication 1, **caractérisé en ce qu'**il comprend un récepteur téléphonique permettant la programmation à distance au moyen d'un téléphone à accès codé.

3. Appareil selon la revendication 1, **caractérisé en ce qu'**il présente une touche SOS (9) déclenchant l'écoute des données de base de son propriétaire et les personnes à prévenir en cas d'accident.

4. Appareil selon la revendication 1, **caractérisé en ce qu'**il fonctionne sur piles et/ou sur batterie, dont la trappe d'accès est située sur la face A.

5. Appareil selon la revendication 1, **caractérisé en ce qu'**il présente latéralement une molette (8) de réglage de l'intensité sonore du haut-parleur.

## Claims

1. - A portable recording apparatus including means allowing to be informed at programmed days and times of the receipt of messages previously recorded, the apparatus comprising a recorder and an internal clock triggering the delivery of messages at desired dates and times, **characterized in that** it comprises a housing having two faces, a face A thereof including a push button (1) and a loudspeaker (2) so that when the latter emits an alarm, the person with a deficient memory can press the push button (1) in order to hear what he/she should then do, and a face B that is only accessible by opening a shutter (10) that covers it, this face B including a microphone (14), a screen (3) indicating the date and time, programmable by means of displacement keys (4) and encrypted information (7) to, the date and time being fixed, record the message by pressing a key (5), the internal clock of the apparatus enabling the triggering at the desired time of the alarm that will permit the hearing of the message.

2. - The apparatus according to claim 1, **characterized in that** it comprises a telephonic receiver enabling the remote programming by means of a telephone with an coded access.

3. - The apparatus according to claim 1, **characterized in that** it has an SOS key (9) triggering the playing of basic data concerning its owner and the persons to contact in case of an accident.

4. - The apparatus according to claim 1, **characterized in that** it operates on cells and/or on battery, the access door of which is located on face A.

5. - The apparatus according to claim 1, **characterized in that** it laterally has a knurled adjusting wheel to set of the sound intensity of the loudspeaker.

## Patentansprüche

1. Tragbares Aufnahmegerät mit Mitteln, welche es ermöglichen, zu einprogrammierten Tagen und Uhrzeiten von der Aufnahme der vorab aufgezeichneten Nachrichten benachrichtigt zu werden, wobei das Gerät eine Aufnahmeeinheit und eine interne Uhr umfaßt, welche die Ausgabe der Nachrichten zu gewünschten Daten und Uhrzeiten auslöst,
**dadurch gekennzeichnet,**
**daß** es ein Gehäuse umfaßt, das zwei Seiten aufweist, dessen eine Seite A einen Druckknopf (1) und einen Lautsprecher (2) umfaßt, damit, wenn der letztere ein Klingelzeichen aussendet, die Person mit schlechtem Gedächtnis auf den Druckknopf drücken kann, um sich sagen zu hören, was sie nun tun muß, und dessen eine Seite B nur nach dem Öffnen einer Klappe (10) zugänglich ist, die sie abdeckt, wobei die Seite B ein Mikrophon (14) und einen Bildschirm (3) umfaßt, der das Datum und die Uhrzeit anzeigt, die durch Verschiebungstasten (4) und durch Zifferninformation programmierbar sind, um die Nachricht durch Drücken auf eine Taste (5) aufzuzeichnen, nachdem das Datum und die Uhrzeit festgesetzt sind, wobei die interne Uhr des Geräts erlaubt, das Klingelzeichen zu einer gewünschten Uhrzeit auszulösen, welches das Vorspielen der Nachricht ermöglichen wird.

2. Gerät nach Anspruch 1,
**dadurch gekennzeichnet,**
**daß** es einen Telefonempfänger aufweist, welcher die Fernprogrammierung mittels eines Telefons über einen Zugriffscode ermöglicht.

3. Gerät nach Anspruch 1,
**dadurch gekennzeichnet,**
**daß** es eine SOS-Taste (9) aufweist, die das Abhören der Basisdaten seines Besitzers und der zu benachrichtigenden Personen im Fall eines Unfalls auslöst.

4. Gerät nach Anspruch 1,
**dadurch gekennzeichnet,**
**daß** es mit Batterien und/oder einem Akku funktioniert, deren Zugangsklappe sich auf der Seite A befindet.

5. Gerät nach Anspruch 1,
**dadurch gekennzeichnet,**
**daß** es seitlich ein Einstellungsrad (8) der Lautstärke des Lautsprechers aufweist.
